# EUROPÄISCHE PATENTANMELDUNG

(11) **EP 0 643 023 A2**
(43) Veröffentlichungstag der Anmeldung: **15.03.1995**
(21) Anmeldenummer: 94114178.0
(22) Anmeldetag: 09.09.1994
(51) Int. Cl.: C04B 35/80, C04B 35/573, B32B 18/00

(54) **Herstellung eines mit Kohlenstoffasern verstärkten Verbundwerkstoffs**

(30) Priorität: 15.09.1993 DE 4331307
(71) Anmelder: ABB PATENT GmbH, D-68309 Mannheim (DE)
(72) Erfinder: Schulten, Rudolf, Prof. Dr., D-52072 Aachen (DE); Lorson, Harald, D-52080 Aachen (DE); Kusnanto, -, D-52064 Aachen (DE); Sahabi, Behzad, D-52070 Aachen (DE)
(74) Vertreter: Rupprecht, Klaus, Dipl.-Ing.

(57) **Zusammenfassung**

Die Erfindung betrifft ein Verfahren zur Herstellung eines mit Kohlenstoffasern (16) verstärkten Verbundwerkstoffes (12) mit einer Siliziumkarbid und Molybdändisilizid aufweisenden Matrix (14), wobei die Matrix (14) aus einem Pulvergemisch von Siliziumkarbid, Kohlenstoff und Molybdändisilizid gebildet wird, das Pulvergemisch mit einem Binder versetzt wird, und wobei anschließend Kohlenstoffasern hinzugemischt werden, das so erhaltene Faser-Matrixgemisch in einer hierfür vorgesehenen Form unter Aufbringung höheren Drucks gepreßt und bei 120°C bis 140°C in der beabsichtigten Form ausgehärtet wird, der ausgehärtete Formkörper bei einer Temperatur zwischen 800°C bis 1000°C pyrolysiert wird, danach der Formkörper von außen mit flüssigem oder pastösem Silizium beaufschlagt wird und anschließend eine Wärmebehandlung in zwei Stufen erfolgt, nämlich zunächst eine Pyrolyse bei 800°C bis 1000°C und dann eine Auslagerung bei einer Temperatur oberhalb des Schmelzpunktes von Silizium, vorzugsweise bei 1500°C bis 1700°C.

## Beschreibung

Die Erfindung betrifft ein Verfahren zur Herstellung eines mit Kohlenstoffasern verstärkten Verbundwerkstoffes mit einer Siliziumkarbid und Molybdändisilizid aufweisenden Matrix.

Bei modernen heißgehenden Bauteilen von thermischen Maschinen und Apparaten besteht zunehmendes Interesse, die seither üblichen zum Einsatz kommenden hochtemperaturbeständigen Werkstoffe, z. B. auf Nickelbasis oder dergleichen, durch andere Werkstoffe zu ersetzen, welche temperaturbeständiger, kostengünstiger bzw. einfacher zu bearbeiten sind.

Eine besondere Rolle spielen in diesem Zusammenhang sogenannte faserverstärkte Werkstoffe, vorzugsweise faserverstärkte Verbundwerkstoffe, bei welchen eine hochtemperaturbeständige Matrix durch Beimengung von hochfesten Fasern die gewünschte Warmfestigkeit erreicht. Eine besonders wichtige Entwicklungsaufgabe stellt sich bei der Herstellung keramischer Werkstoffe mit Faserverstärkung hinsichtlich der Verbesserung ihrer mechanischen Eigenschaften, insbesondere ihrer Bruchfestigkeit. Unter den keramischen Werkstoffen hat Siliziumkarbid wegen seiner guten Korrosionsbeständigkeit, wie auch wegen seiner hohen Zugfestigkeit große Bedeutung. Um die mechanischen Eigenschaften von Siliziumkarbid weiter zu verbessern, werden seit einiger Zeit große Anstrengungen unternommen, Siliziumkarbid mit geeigneten Fasern zu verstärken.

Die bisherigen Versuche, dieses mit Siliziumkarbid-Fasern zu erreichen, können als gescheitert angesehen werden, da diese Fasern bei Temperaturen über 1200°C bis 1300°C versagen. Hierfür maßgeblich dürfte der bei der Art der Herstellung nicht ganz zu vermeidende Sauerstoffgehalt sein sowie eine in diesem Temperaturbereich einsetzende Rekristallisation. Andererseits hat sich auch die Verwendung von Kohlenstoffasern bisher als nicht erfolgreich erwiesen, da bei dem Sinterungsvorgang des Siliziumkarbids, der bei einer Temperatur von bis zu 2000°C durchgeführt wird, ein Angriff von Silizium auf die Kohlenstoffasern erfolgt, der seinerseits zu einer erheblichen Verschlechterung der Eigenschaften dieser Fasern führt. Andererseits führen Sinterungsvorgänge bei geringeren Temperaturen zu Siliziumkarbid-Körpern, die mangels ausreichender Dichte nicht brauchbar sind.

Ausgehend von diesem Stand der Technik ist es daher Aufgabe der Erfindung, ein Verfahren zur Herstellung eines Verbundwerkstoffs der eingangs genannten Art anzugeben, der die Herstellung von Bauteilen mit ausreichenden mechanischen Eigenschaften ermöglicht.

Diese Aufgabe wird erfindungsgemäß durch die kennzeichnenden Merkmale des Patentanspruchs 1 gelöst.

Demgemäß ist ein Pulvergemisch aus Siliziumkarbid, Kohlenstoff und Molybdändisilizid vorgesehen, welches mit einem Binder versetzt und anschließend mit Kohlenstoffasern gemischt wird. Durch Pressen bei höherem Druck , ca. 10 bis 50 MPa, und einer einhergehenden Verarbeitungstemperatur von 120°C bis 140°C wird dieses Gemisch in der vorgesehenen Form ausgehärtet. Durch entsprechende Nachbearbeitung, z. B. durch Zerspanen, kann diese Form auf die Fertigmaße bearbeitet werden. Anschließend wird der so erhaltene Formkörper, vorzugsweise unter Vakuum oder in Inertgasatmosphäre bei Temperaturen von 800°C bis 1000°C pyrolysiert. Danach erfolgt eine Beaufschlagung des Formkörpers von außen mit flüssigem Silizium, der sich eine Infiltrationsbehandlung bei Temperaturen oberhalb des Schmelzpunktes des Siliziums, vorzugsweise bei 1500°C bis 1700°C anschließt. Dieses Verfahren ist Gegenstand der deutschen Patentanmeldung P 42 03 773.5 und wird dort ausführlich dargelegt. Gemäß diesem Verfahren wird der Körper mit einer aus einem Gemisch eines Kohlenwasserstoffs, z. B. Mehl, und Silizium gebildeten Paste von außen bedeckt. Durch Aufheizen des mit der Paste umhüllten Formkörpers wird zunächst bei 800°C bis 1000°C die Kohlenwasserstoff-Verbindung durch Pyrolyse in ein Kohlenstoffgerüst umgewandelt und bei weiterem Erhitzen auf mehr als 1450°C das Silizium verflüssigt. Überschüssiges Silizium, welches nicht mit dem Kohlenstoff reagiert, tritt an die Oberfläche des Formkörpers und dringt dort aufgrund des Kapillareffektes in die Poren des Formkörpers ein, wo es mit den noch vorhandenen Kohlenstoffkörnern des Körpers reagiert und hierbei die Poren mit dem entstehenden Siliziumkarbid füllt. Gleichzeitig verbindet sich im Formkörper das Silizium mit dem körnig zugegebenen Kohlenstoff zu kompaktem Siliziumkarbid, ohne die ebenfalls eingelagerten Kohlenstoffasern zu zerstören. Diese werden infolge einer Vorbehandlung der Fasern mit Siliziumdioxid zur Bildung einer dünnen Siliziumkarbid-Schicht und wegen der niedrigen Behandlungstemperatur nicht angegriffen.

Als Zusammensetzung für das oben erwähnte Pulvergemisch aus Siliziumkarbid, Kohlenstoff, Molybdändisilizid und Binder wird zweckmäßigerweise für das Pulver eine Zusammensetzung von etwa 65 bis 85 Gew.-% Siliziumkarbid, etwa 5 bis 15 Gew.-% Kohlenstoff und etwa 10 bis 30 Gew.-% Molybdändisilizid gewählt. Den Rest von etwa 5 bis 10 Gew.-% bildet der erwähnte Binder.

Für die Faserverstärkung bieten sich entweder Kurzfasern mit Längen von ca. 1 mm und Dicken von ca. 10 µm oder Langfasern an. Letztere können in Form von Kohlenstoff-Faser-Gewebe in die Matrix eingelagert werden.

Vor der Einlagerung der Kurzfasern aus Kohlenstoff werden diese zweckmäßigerweise mit einer dünnen Siliziumkarbidschicht umgeben. Die Herstellung dieser Schicht erfolgt durch Ummantelung der Kurzfasern mit Siliziumdioxid bzw. durch Beaufschlagung mit Kieselsäureestern, wobei anschließend die so ummantelten Fasern auf ca. 800°C bis 1300°C erhitzt werden. Bei dieser Behandlung bildet sich eine Siliziumkarbid-Schicht auf der Faser mit einer Dicke von mindestens 0,2 µm in ca. 1 Stunde aus.

Die so beschichteten Kurzfasern werden mit dem oben erwähnten Gemisch, welches zur Herstellung der Matrix dient, mit einem Gehalt von ca. 50 Vol.-% gemischt. Hierdurch wird eine erhebliche Verbesserung der mechanischen Festigkeit sowie der thermischen Eigenschaften des Verbundwerkstoffs erreicht.

Sollen Langfasern anstelle von Kurzfasern, z. B. in Form von gebräuchlichen Kohlenstoffgeweben verwendet werden, so ist eine Vorbehandlung mit Siliziumdioxid oder Kieselsäureester zur Erzeugung von Siliziumkarbidumhüllungen auf den Fasern nicht zwingend erforderlich. Bei dem angegebenen Verfahren werden diese nur wenig von dem Silizium während der Temperaturbehandlung im Bereich von 1500°C bis 1700°C angegriffen und bleiben somit als intakte Kohlenstoffasern erhalten. Hierbei ist es jedoch zweckmäßig, die Gewebelagen jeweils in Schichten mit dem angegeben Pulvergemisch zu bedecken, wobei eine Schichtdicke von etwa 0,05 bis 0,1 mm jeweils einzuhalten ist, so daß eine Schichtfolge von Gewebe und Pulvergemisch zu einem größeren und dickeren Formkörper führt.

Einen weiteren Korrosionsschutz kann man auf folgende Weise erreichen, indem der Formkörper auf seiner Außenoberfläche vollständig mit einer aus Siliziumkarbid, Silizium, Kohlenstoff, Molybdändisilizid und Binder bestehenden Schicht versehen wird, die den Formkörper vollständig einschließt. Diese Schicht kann im Zuge des oben beschriebenen Preßvorgangs entsprechend eingestellt werden. Entsprechend der Erfindung empfiehlt sich hier für die Außenschicht eine Schichtdicke von 100 µm bis zu einigen mm.

Mit Hilfe des erfindungsgemäßen Verfahrens ist es nunmehr möglich, Formkörper mit komplizierter Geometrie herzustellen. So ist es möglich beispielsweise Platten, Rohre, Zylinder oder Körper mit gekrümmten Oberflächen herzustellen.

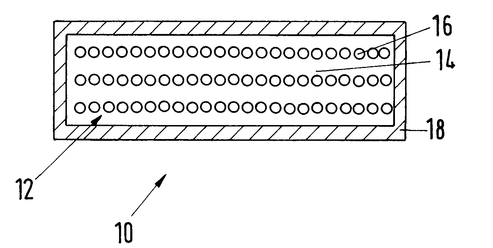

Anhand eines in der Zeichnung dargestellten Ausführungsbeispieles sollen die Erfindung, vorteilhafte Ausgestaltungen und Verbesserungen sowie besondere Vorteile der Erfindung näher erläutert und beschrieben werden.

Es zeigt die einzige Figur den schematischen Aufbau eines nach dem erfindungsgemäßen Verfahren hergestellten Verbundkörpers im Querschnitt.

In der einzigen Figur ist der Querschnitt eines Verbundkörpers 10 gezeigt, der entsprechend dem erfindungsgemaßen Verfahren aufgebaut ist. Sein Kernbereich 12 weist eine wechselweise Anordnung einer aus Silizium, Siliziumkarbid und Molybdändisilizid bestehenden Matrix 14 im Wechsel mit Kohlenstoffaser-Gewebe 16 auf, wobei die gezeigte Darstellung nicht als maßstäblich sondern rein schematisch anzusehen ist. Wie der Darstellung in der einzigen Figur ferner zu entnehmen ist, sind die Kohlenstoffasern 16 des Kohlenstoffaser-Gewebes vollständig in der Matrix 14 eingebettet, das heißt, vollständig nach außen hin abgeschirmt. Im Hinblick auf besondere Korrosionserfordernisse ist der aus Matrix 14 und Fasergewebe 16 gebildete Kern 12 des Verbundkörpers 10 mit einer allseitig umschließenden Schutzschicht 18 aus Siliziumkarbid versehen.

## Patentansprüche

1. Verfahren zur Herstellung eines mit Kohlenstoffasern (16) verstärkten Verbundwerkstoffes (12) mit einer Siliziumkarbid und Molybdändisilizid aufweisenden Matrix (14), dadurch gekennzeichnet, daß die Matrix (14) aus einem Pulvergemisch von Siliziumkarbid, Kohlenstoff und Molybdändisilizid gebildet wird, daß das Pulvergemisch mit einem Binder versetzt wird, daß anschließend Kohlenstoffasern hinzugemischt werden, daß das so erhaltene Faser-Matrixgemisch in einer hierfür vorgesehenen Form unter Aufbringung von höherem Druck gepreßt und bei 120°C bis 140°C in der beabsichtigten Form ausgehärtet wird, daß der ausgehärtete Formkörper bei einer Temperatur zwischen 800°C bis 1000°C pyrolysiert wird, daß danach der Formkörper von außen mit flüssigem oder pastösem Silizium beaufschlagt wird und daß anschließend eine Wärmebehandlung in zwei Stufen erfolgt, nämlich zunächst eine Pyrolyse bei 800°C bis 1000°C und dann eine Auslagerung bei einer Temperatur oberhalb des Schmelzpunktes von Silizium, vorzugsweise bei 1500°C bis 1700°C.

2. Verfahren nach Anspruch 1, mit einem Pulvergemisch zur Herstellung der Matrix, welches aus etwa 65 bis 85 Gew.-% Siliziumkarbid, aus 5 bis 15 Gew.-% Kohlenstoff und aus etwa 10 bis 30 Gew.-% Molybdändisilizid besteht.

3. Verfahren nach Anspruch 1 oder 2, dadurch gekennzeichnet, daß dem Pulvergemisch Fasern mit einer Länge von ca. 1 mm und einer Dicke von 10 µm zugegeben werden.

4. Verfahren nach Anspruch 1 oder 2, dadurch gekennzeichnet, daß dem Pulvergemisch Langfasern aus Kohlenstoff zugegeben werden.

5. Verfahren nach Anspruch 4, dadurch gekennzeichnet, daß dem Pulvergemisch aus Langfasern gebildete Kohlenstoffasergewebe zugegeben werden.

6. Verfahren nach einem der vorherigen Ansprüchen, dadurch gekennzeichnet, daß derr Formkörper schichtweise durch wechselweise Anordnung von Schichten aus Kohlenstoffasern und der aus Siliziumkarbid, Kohlenstoff und Molybdändisilizid einschließlich Binder gebildeten Matrix jeweils in Schichtdicken von 0,01 bis 0,1 mm gebildet wird.

7. Verfahren nach einem der vorherigen Ansprüche, dadurch gekennzeichnet, daß der Formkörper mit einem Faseranteil von ca. 50 Vol.-% entsprechend einem Volumenverhältnis zur Matrix von 1 zu 1 hergestellt wird.

8. Verfahren nach einem der vorherigen Ansprüche, dadurch gekennzeichnet, daß der Formkörper mit einer zusätzlichen, allseitig aufgebrachten Schicht aus Siliziumkarbid, Kohlenstoff, Silizium sowie Molybdändisilizid und Binder versehen wird, so daß der Formkörper vollständig von faserfreiem Siliziumkarbid eingeschlossen ist.

9. Verfahren nach Anspruch 8, dadurch gekennzeichnet, daß die Schichtdicke der zusätzlichen Schicht zwischen 100 µm bis einigen mm beträgt.

10. Verfahren nach einem der Ansprüche 8 oder 9, dadurch gekennzeichnet, daß die zusätzliche Schicht mittels Preßvorgang bei 10 bis 50 MPa auf den Formkörper aufgepreßt wird.

11. Verfahren nach einem der vorherigen Ansprüche, dadurch gekennzeichnet, daß eine mit Kohlenstoffkurzfasern verstärkte Siliziumkarbid-Molybdändisilizid-Matrix als Korrosions- und Verschleißschutzschicht auf einen Körper aus graphitischem Werkstoff aufgepreßt wird.
